(19) Europäisches Patentamt / European Patent Office / Office européen des brevets

(11) **EP 2 608 549 B1**

(12) **EUROPEAN PATENT SPECIFICATION**

(45) Date of publication and mention
of the grant of the patent:
**06.09.2017 Bulletin 2017/36**

(51) Int Cl.:
**H04N 13/00** (2006.01)    **G06T 7/00** (2017.01)
**G06T 7/593** (2017.01)

(21) Application number: **12008266.4**

(22) Date of filing: **11.12.2012**

(54) **Method and apparatus for adjusting depth-related information map according to quality measurement result of the depth-related information map**

Verfahren und Vorrichtung zur Einstellung einer tiefenbezogenen Informationskarte entsprechend dem Qualitätsmessergebnis der tiefenbezogenen Informationskarte

Procédé et appareil de réglage de carte d'informations relatives à la profondeur conformément au résultat de mesure de carte d'informations relatives à la profondeur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011   US 201161579669 P**
**09.08.2012   US 201213570256**

(43) Date of publication of application:
**26.06.2013   Bulletin 2013/26**

(73) Proprietor: **MediaTek Inc.**
**Hsin-Chu (TW)**

(72) Inventor: **Cheng, Chao-Chung**
**Tainan City (TW)**

(74) Representative: **Hoefer & Partner Patentanwälte mbB**
**Pilgersheimer Straße 20**
**81543 München (DE)**

(56) References cited:
**WO-A1-2011/104151     US-A- 5 917 937**
**US-A1- 2011 199 458**

## Description

The present invention relates to a depth control method for adjusting a depth-related information map (e.g., a disparity map or a depth map) according to a quality measurement result of the depth-related information map and related depth control apparatus according to pre-characterizing clauses of claims 1 and 5. Such a method and apparatus are described in US 5,917,937 and WO 2011/104151 A1.

With the development of science and technology, users are pursing stereoscopic and more real image display rather than high quality images. There are two techniques of present stereo display. One is to use a video display apparatus, which collaborates with glasses (such as anaglyph glasses, polarization glasses or shutter glasses), while the other is to use only a video display apparatus without any accompanying glasses. No matter which technique is utilized, the main theory of stereo display is to make the left eye and the right eye see different images, thus viewer's brain will regard the different images seen from two eyes as a stereo image.

Regarding the general two-dimensional (2D) display, the focal distance/plane is the same as the convergence distance/plane. However, regarding the three-dimensional (3D) display, the focal plane is on the display screen, but the convergence plane may be misaligned with the focal plane. An improper mismatch may introduce uncomfortable stereo feeing for the viewer. For example, the viewer may have uncomfortable stereo feeing when a displayed 3D object is too far or too near. Besides, the viewer may also have uncomfortable stereo feeing when a 3D object is displayed with too less stereo effect or too much stereo effect.

Thus, to improve the stereo display quality, there is a need for an adaptive depth adjustment which is capable of dynamically changing the depth/disparity setting of the images to be displayed under a 3D display environment.

This in mind, the present invention aims at providing a depth control method and depth control apparatus for adjusting depth-related information map according to quality measurement result of the depth-related information map to thereby dynamically change the depth/disparity setting of the 3D playback.

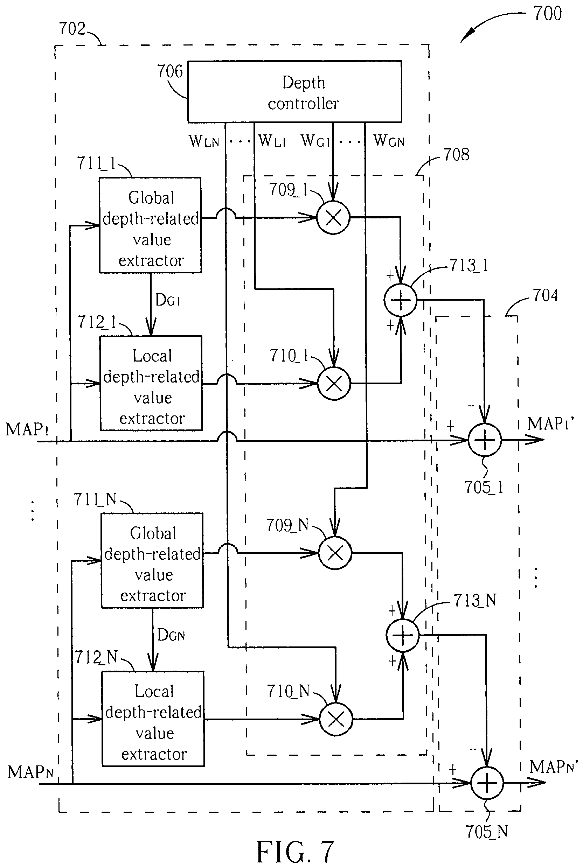

This is achieved by a depth control method and depth control apparatus according to claims 1 and 5. The dependent claims pertain to corresponding further developments and improvements. Only the exemplary implementation of an adjustment circuit according to figure 7 and described in the corresponding parts of the description falls within the scope of the claims. The other exemplary implementations of an adjustment circuit do not fall within the scope of the claims.

In the following, the invention is further illustrated by way of example, taking reference to the accompanying drawings. Thereof

FIG. 1 is a block diagram illustrating a depth control apparatus according to a first embodiment of the present invention,
FIG. 2 is a block diagram illustrating a first exemplary implementation of a quality measurement circuit according to the present invention,
FIG. 3 is a diagram illustrating an example of the confidence level determination performed by the quality measurement circuit shown in FIG. 2,
FIG. 4 is a block diagram illustrating a second exemplary implementation of a quality measurement circuit according to the present invention,
FIG. 5 is a diagram illustrating an example of the confidence level determination performed by the quality measurement circuit shown in FIG. 4,
FIG. 6 a diagram illustrating a first exemplary implementation of an adjustment circuit,
FIG. 7 is a diagram illustrating a second exemplary implementation of an adjustment circuit according to the present invention,
FIG. 8 is a diagram illustrating the exemplary mapping relationship between a confidence level and a second depth control weighting factor (e.g., a local weighting factor),
FIG. 9 is a diagram illustrating the exemplary relationship among original depth-related values, local depth-related values, and a global depth-related value,
FIG. 10 is a flowchart illustrating a depth control method according to an embodiment of the present invention, and

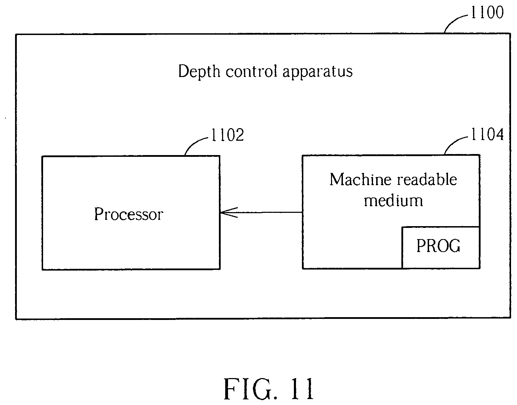

FIG. 11 is a block diagram illustrating a depth control apparatus according to a second embodiment of the present invention.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is electrically connected to another device, that connection may be through a direct electrical connection, or through an indirect electrical connection via other devices and connections.

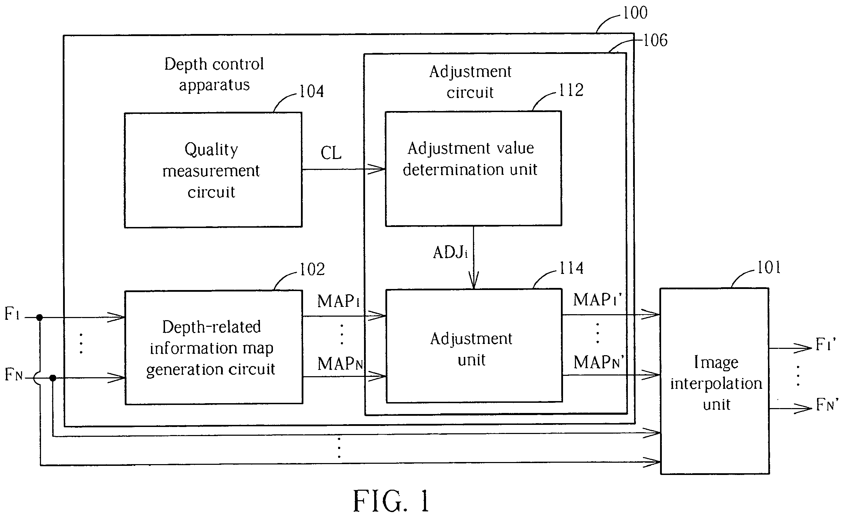

FIG. 1 is a block diagram illustrating a depth control apparatus according to a first embodiment of the present invention. The depth control apparatus 100 includes a depth-related information map generation circuit 102, a quality measurement circuit 104, and an adjustment circuit 106, where the adjustment circuit 106 includes an adjustment value determination unit 112 and an adjustment unit 114. The depth-related information map generation circuit 102 is arranged for receiving a plurality of input images $F_1$-$F_N$ corresponding to different views, and generating one or more depth-related information maps (e.g., disparity maps or depth maps) $MAP_1$-$MAP_N$ according to the input images $F_1$-$F_N$. For example, the input images $F_1$-$F_N$ may include a left-view image and a right-view image paired with each other, and the depth-related information maps $MAP_1$-$MAP_N$ may include one disparity map generated for the left-view image and another disparity map generated for the right-view image.

Alternatively, the input images $F_1$-$F_N$ are derived from a multi-view video stream, and one disparity information map may be generated for two input images with adjacent viewing angles. The quality measurement circuit 104 is arranged for estimating a confidence level CL by measuring quality of depth-related information map(s) generated from the depth-related information map generation circuit 102. In other words, the confidence level CL is indicative of the quality of estimated disparity/depth map(s). The adjustment circuit 106 is coupled to the depth-related information map generation circuit 102, the quality measurement circuit 104 and an image interpolation unit 101, and is arranged for adjusting the depth-related information maps $MAP_1$-$MAP_N$ according to the confidence level CL, and accordingly outputting adjusted depth-related information maps (e.g., adjusted disparity maps or adjusted depth maps) $MAP_1'$-$MAP_N'$ to the image interpolation unit 101.

More specifically, the adjustment value determination unit 112 of the adjustment circuit 106 is arranged for determining an adjustment value $ADJ_i$ for each depth-related value included in a depth-related information map (e.g., one of $MAP_1$-$MAP_N$) according to the confidence level CL, and the adjustment unit 114 of the adjustment circuit 106 is arranged for applying adjustment values $ADJ_i$ to respective depth-related values included in the depth-related information map (e.g., one of $MAP_1$-$MAP_N$). The image interpolation unit 101 generates output images $F_1'$-$F_N'$ corresponding to different views by performing interpolation upon the input images $F_1$-$F_N$ according to the adjusted depth-related information maps $MAP_1'$-$MAP_N'$. In other words, based on the adjusted depth-related information maps $MAP_1'$-$MAP_N'$ provided by the depth control apparatus 100, the image interpolation unit 101 is arranged to adjust the depth effect of the input images $F_1$-$F_N$ (e.g., stereo effect of the input images $F_1$-$F_N$) to thereby interpolate resultant output images $F_1'$-$F_N'$ with adjusted views. Hence, when the output images $F_1'$-$F_N'$ are displayed, the viewer will have improved 3D viewing experience due to adaptive depth adjustment.

To put it simply, the adjustment made to the depth-related information maps will result in adjusted depth effect due to the fact that the output images are derived from the input images and the adjusted depth-related information maps. Thus, the adaptive depth control applied to the input images $F_1$-$F_N$ to be displayed is achieved by adjusting at least a portion (e.g., part or all) of the originally generated depth-related information maps $MAP_1$-$MAP_N$. With proper adjustment made to the depth-related information maps $MAP_1$-$MAP_N$, the input images $F_1$-$F_N$ are adequately adjusted to make the resultant output images $F_1'$-$F_N'$ provide the viewer with comfortable 3D feeling. As the present invention focuses on the adaptive depth adjustment performed by the depth control apparatus 100, further description of the image interpolation unit 101 is omitted here for brevity.

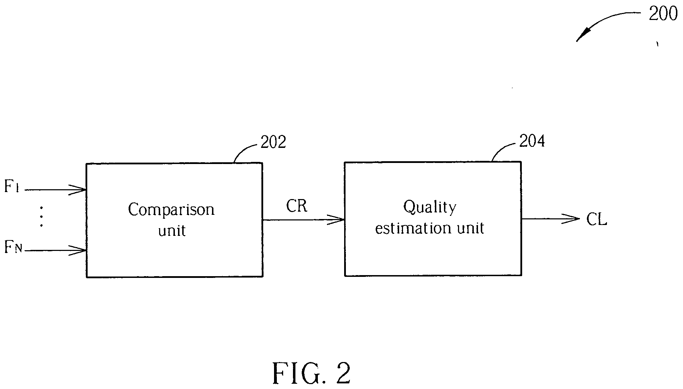

As mentioned above, the quality measurement circuit 104 is responsible for generating the confidence level CL indicative of the quality of the estimated disparity/depth maps. Please refer to FIG. 2, which is a block diagram illustrating a first exemplary implementation of a quality measurement circuit according to the present invention. In one embodiment, the quality measurement circuit 104 shown in FIG. 1 may be realized by the quality measurement circuit 200 shown in FIG. 2. The quality measurement circuit 200 includes a comparison unit 202 and a quality estimation unit 204. The comparison unit 202 is arranged for performing a comparison upon images selected from the input images $F_1$-$F_N$, and accordingly generating a comparison result CR. The quality estimation unit 204 is coupled to the comparison unit 202, and arranged for estimating the confidence level CL by referring to the comparison result CR.

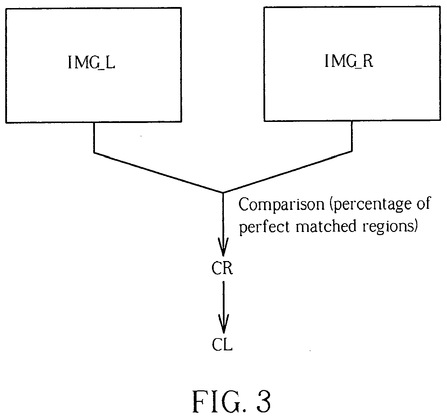

An example of the confidence level determination performed by the quality measurement circuit 200 is illustrated in FIG. 3. Consider a case where the input images $F_1$-$F_N$ include a pair of a left-view image IMG_L and a right-view image IMG_R. The comparison unit 202 is therefore operative to check the percentage of perfect matched regions found in the left-view image IMG_L and the right-view image IMG_R by comparing pixel values of the left-view image and the right-view image, and then generate the comparison result CR indicative of the percentage of perfect matched regions. When the percentage of perfect matched regions is low, this implies that there is a large occlusion region or there are many occlusion regions or unmatched regions. That is, the disparity/depth estimation is unreliable. Next, the quality estimation unit 204 refers to the percentage of perfect matched regions (i.e., the comparison result CR) to set the confidence level CL. By way of example, the confidence level CL may be positively correlated with the percentage of perfect matched regions. In other words, the confidence level CL would be set by a larger value when the percentage of perfect matched regions is higher, and the confidence level CL would be set by a smaller value when the percentage of perfect matched regions is lower.

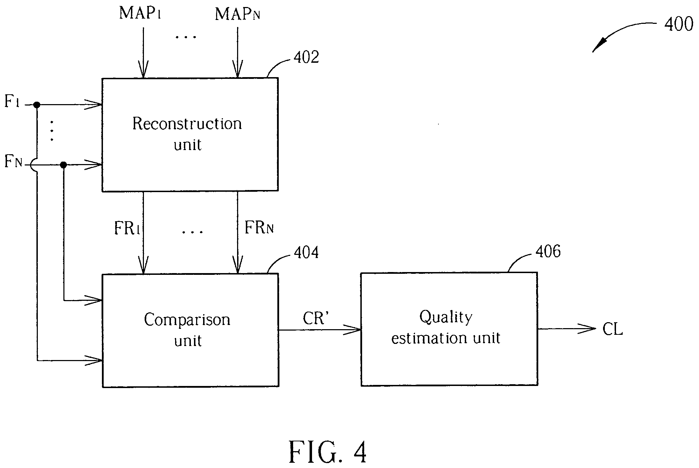

Please refer to FIG. 4, which is a block diagram illustrating a second exemplary implementation of a quality measurement circuit according to the present invention. In another embodiment, the quality measurement circuit 104 shown in FIG. 1 may be realized by the quality measurement circuit 400 shown in FIG. 4. The quality measurement circuit 400 includes a reconstruction unit 402, a comparison unit 404 and a quality estimation unit 406. The reconstruction unit 402 is arranged for generating at least one reconstructed image $FR_1$-$FR_N$ according to at least one depth-related information map $MAP_1$-$MAP_N$ and at least one image selected from the input images $F_1$-$F_N$. The comparison unit 404 is coupled to the reconstruction unit 402, and arranged for performing a comparison upon at least one reconstructed image $FR_1$-$FR_N$ and at least one image selected from the input images $F_1$-$F_N$, and accordingly generating a comparison result CR'. The quality estimation unit 406 is coupled to the comparison unit 404, and arranged for estimating the confidence level CL by referring to the comparison result CR'.

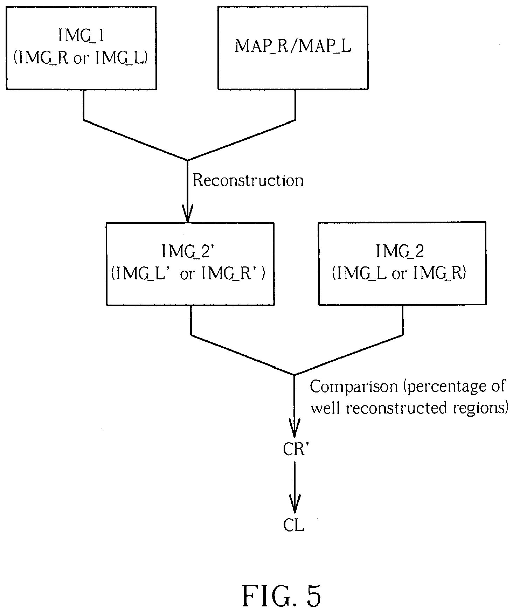

An example of the confidence level determination performed by the quality measurement circuit 400 is illustrated in FIG. 5. Consider a case where the input images $F_1$-$F_N$ include a pair of a left-view image IMG_L and a right-view image IMG_R, where one of the input images IMG_1 and IMG_2 shown in FIG. 5 is the left-view image IMG_L, and the other of the input images IMG_1 and IMG_2 shown in FIG. 5 is the right-view image IMG_R. When the input image IMG_1 is the left-view image IMG_L, the reconstruction unit 402 generates a reconstructed image IMG_2' (e.g., a reconstructed right-view image IMG_R') according to the left-view image IMG_L and the corresponding disparity/depth map MAP_L of the left-view image IMG_L, and the comparison unit 404 checks the percentage of well reconstructed regions found in the original input image IMG_2 (i.e., the right-view image IMG_R) and the reconstructed image IMG_2' (i.e., the reconstructed right-view image IMG_R') by comparing pixel values of the original right-view image and the reconstructed right-view image, and generates the comparison result CR' indicative of the percentage of well reconstructed regions. When the percentage of well reconstructed regions is low, this implies that there is a large occlusion region or there are many occlusion regions. That is, the disparity/depth estimation is unreliable. Next, the quality estimation unit 406 refers to the percentage of well reconstructed regions (i.e., the comparison result CR') to set the confidence level CL. By way of example, the confidence level CL may be positively correlated with the percentage of well reconstructed regions. In other words, the confidence level CL would be set by a larger value when the percentage of well reconstructed regions is higher, and the confidence level CL would be set by a smaller value when the percentage of well reconstructed regions is lower.

When the input image IMG_1 is the right-view image IMG_R, the reconstruction unit 402 generates a reconstructed image IMG_2' (e.g., a reconstructed left-view image IMG_L') according to the right-view image IMG_R and the disparity/depth map MAP_R of the right-view image IMG_R, and the comparison unit 404 checks the percentage of well reconstructed regions found in the original input image IMG_2 (i.e., the left-view image IMG_L) and the reconstructed image IMG_2' (i.e., the reconstructed left-view image IMG_L') by comparing pixel values of the original right-view image and the reconstructed right-view image, and generates the comparison result CR' indicative of the percentage of well reconstructed regions. Next, the quality estimation unit 406 refers to the percentage of well reconstructed regions (i.e., the comparison result CR') to set the confidence level CL. The same objective of setting the confidence level CL in response to the percentage of well reconstructed regions is achieved.

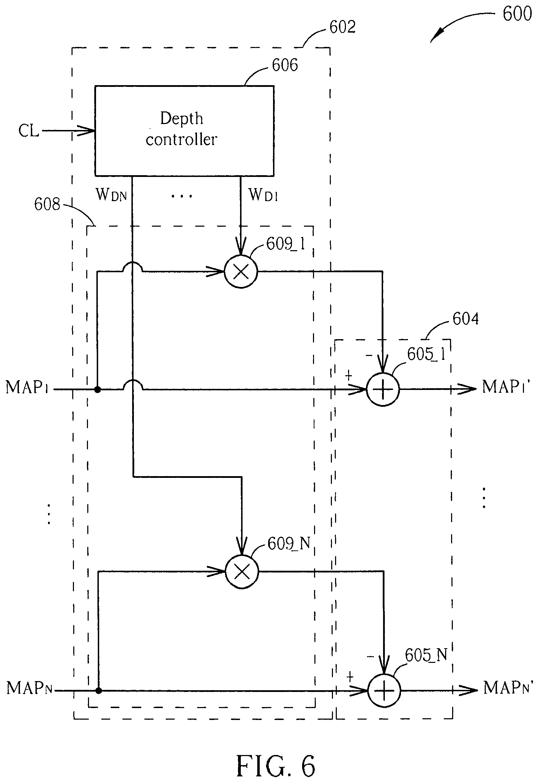

After receiving the confidence level CL provided by the quality measurement circuit, the adjustment circuit 106 refers to the received confidence level CL to apply adaptive depth adjustment to the depth-related information maps $MAP_1$-$MAP_N$ for achieving the objective of making adaptive depth control to the input images $F_1$-$F_N$ to be displayed. Please refer to FIG. 6, which is a diagram illustrating a first exemplary implementation of an adjustment circuit. In one embodiment, the adjustment circuit 106 shown in FIG. 1 may be realized by the adjustment circuit 600 shown in FIG. 6. The adjustment circuit 600 includes an adjustment value determination unit 602 and an adjustment unit 604, where the adjustment value determination unit 112 and the adjustment unit 114 shown in FIG. 1 may be realized by the adjustment value determination unit 602 and the adjustment unit 604, respectively.

In this example, the adjustment value determination unit 602 includes a depth controller 606 and an adjustment value determinator 608. The depth controller 606 is arranged for setting a plurality of depth control weighting factors $W_{D1}$-$W_{DN}$ for different depth-related information maps (e.g., disparity maps or depth maps) $MAP_1$-$MAP_N$ in response to the confidence level CL. In one exemplary design, the depth control weighting factors $W_{D1}$-$W_{DN}$ may be identical to each other. That is, the depth controller 606 may use the same value to set the depth control weighting factors $W_{D1}$-$W_{DN}$. In another exemplary design, some or all of the depth control weighting factors $W_{D1}$-$W_{DN}$ may be different from each other. That is, the depth controller 606 may set values of the depth control weighting factors $W_{D1}$-$W_{DN}$, individually. Regarding each of the depth control weighting factors $W_{D1}$-$W_{DN}$, the depth control weighting factor may be positively correlated with the confidence level CL. For example, the depth control weighting factor would be set by a larger value when the confidence level CL is higher, and the depth control weighting factor would be set by a smaller value when the confidence level CL is lower.

The adjustment value determinator 608 is coupled to the depth controller 606, and includes a plurality of multipliers 609_1-609_N. The multipliers 609_1-609_N receive the depth control weighting factors $W_{D1}$-$W_{DN}$, respectively. Each multiplier is arranged for multiplying a corresponding depth control weighting factor and each depth-related value (e.g., a disparity value or a depth value) included in a corresponding depth-related information map. In other words, the adjustment value determinator 608 is a pixel-based processing circuit used to determine an adjustment value for each depth-related value.

Regarding the adjustment unit 604, it is coupled to the adjustment value determinator 608, and includes a plurality of adders 605_1-605_N, each arranged for perform a subtraction operation upon adjustment values and respective depth-related values of one depth-related information map to thereby generate one adjusted depth-related information map having adjusted depth-related values included therein. In this way, the adjustment unit 604 outputs the adjusted depth-related information maps $MAP_1'$-$MAP_N'$ with the desired disparity/depth setting. Thus, the following image interpolation unit 101 can refer to the adjusted depth-related information maps $MAP_1'$-$MAP_N'$ to perform depth control upon the input images $F_1$-$F_N$ and accordingly generate the output images $F_1'$-$F_N'$ with an adjusted depth effect. The pixel-based operation of the adjustment circuit 600 may be expressed using the following equation.

$$D_{Adjusted} = D_{Estimated} - \alpha \cdot D_{Estimated} \qquad (1)$$

In above equation (1), $D_{Adjusted}$ represents the adjusted disparity/depth value included in an adjusted disparity/depth map, $D_{Estimated}$ represents the original disparity/depth value included in an estimated disparity/depth map, $\alpha \cdot D_{Estimated}$ represents the adjustment value, and $\alpha$ represent the depth control weighting factor. It should be noted that the same depth control weighting factor is applied to all of the disparity/depth values included in the same estimated disparity/depth map.

When there is a large occlusion region (or there are many occlusion regions) and/or the reliability of the estimated disparity/depth map is poor, the depth control weighting factor would be reduced to mitigate the undesired side effect, thus allowing the 3D display to be adjusted to a comfortable convergence depth. In this way, the 3D display quality is improved.

Please refer to FIG. 7, which is a diagram illustrating a second exemplary implementation of an adjustment circuit according to the present invention. In another embodiment, the adjustment circuit 106 shown in FIG. 1 may be realized by the adjustment circuit 700 shown in FIG. 7. The adjustment circuit 700 includes an adjustment value determination unit 702 and an adjustment unit 704, where the adjustment value determination unit 112 and the adjustment unit 114 shown in FIG. 1 may be realized by the adjustment value determination unit 702 and the adjustment unit 704, respectively. In this embodiment, the adjustment value determination unit 702 includes a depth controller 706, an adjustment value determinator 708, a plurality of global depth-related value extractors 711_1-711_N, and a plurality of local depth-related value extractors 712_1-712_N. The depth controller 706 is arranged for setting a plurality of first depth control weighting factors $W_{G1}$-$W_{GN}$ for different depth-related information maps (e.g., disparity maps or depth maps) $MAP_1$-$MAP_N$ and further arranged for setting a plurality of second depth control weighting factors $W_{L1}$-$W_{LN}$ for different depth-related information maps (e.g., disparity maps or depth maps) $MAP_1$-$MAP_N$.

In this embodiment, the second depth control weighting factors $W_{L1}$-$W_{LN}$ may be dynamically set in response to the confidence level CL, and first depth control weighting factors $W_{G1}$-$W_{GN}$ may be kept unchanged each time determination of the adjustment value for each depth-related value is performed. Alternatively, the first depth control weighting factors $W_{G1}$-$W_{GN}$ and the second depth control weighting factors $W_{L1}$-$W_{LN}$ may be adjusted separately.

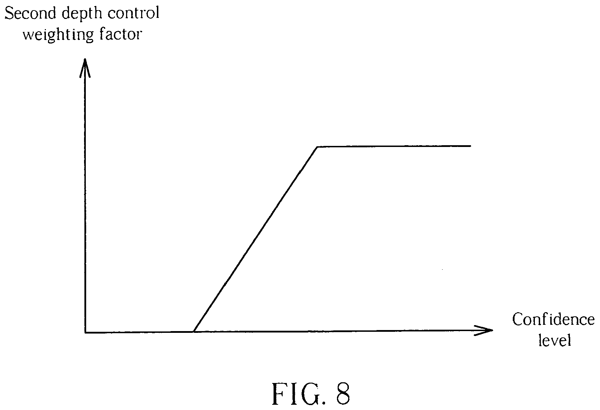

Regarding each of the second depth control weighting factors $W_{L1}$-$W_{LN}$, the depth control weighting factor may be positively correlated with the confidence level CL. For example, the depth control weighting factor would be set by a larger value when the confidence level CL is higher, and the depth control weighting factor would be set by a smaller value when the confidence level CL is lower. By way of example, but not limitation, the confidence level and the second depth control weighting factor (e.g., a local weighting factor) may bear the exemplary mapping relationship as shown in FIG. 8. It should be noted that the first depth control weighting factors $W_{W1}$-$W_{WN}$ may be identical to or different from each other, and/or the second depth control weighting factors $W_{L1}$-$W_{LN}$ may be identical to or different from each other, depending upon actual design requirement/consideration.

Each of the global depth-related value extractors 711_1-711_N is arranged for determining a global depth-related value (e.g., a global disparity/depth value) according to all depth-related values included in a corresponding depth-related information map. In other words, each of the depth-related information maps $MAP_1$-$MAP_N$ would have one global depth-related value only. Therefore, the global depth-related value extractors 711_1-711_N generate global depth-related values $D_{G1}$-$D_{GN}$, respectively. Each of the local depth-related value extractors 712_1-712_N is arranged for determining a local depth-related value (e.g., a local disparity/depth value) for each depth-related value included in a corresponding depth-related information map according to the global depth-related value derived from the corresponding depth-related information map. In other words, each of the depth-related information maps $MAP_1$-$MAP_N$ would have N local depth-related values if the number of depth-related values included in a depth-related information map is equal to N.

In one exemplary design, each global depth-related value extractor sets the global depth-related value by an average $D_{AVG}$ of all depth-related values included in a corresponding depth-related information map. Specifically, the global depth-related value may be derived from the following equation.

$$D_{AVG} = \frac{\sum_{i=1}^{N} D_i}{N} \qquad (2)$$

In above equation (2), $D_i$ is the $i^{th}$ depth-related value included in an estimated depth-related information map (e.g., one of $MAP_1$-$MAP_N$), and N is the number of depth-related values included in the estimated depth-related information map (e.g., one of $MAP_1$-$MAP_N$).

In another exemplary design, each global depth-related value extractor sets the global depth-related value by a weighted sum Dws of all depth-related values included in a corresponding depth-related information map, where a weighting factor of a first depth-related value is different from a weighting factor of a second depth-related value when the first depth-related value is different from the second depth-related value. Specifically, the global depth-related value may be derived from the following equation.

$$D_{WS} = \frac{\sum_{i=1}^{N} W_i \cdot D_i}{\sum_{i=1}^{N} W_i} \qquad (3)$$

In above equation (3), $D_i$ is the $i^{th}$ depth-related value included in an estimated depth-related information map (e.g., one of $MAP_1$-$MAP_N$), N is the number of depth-related values included in the estimated depth-related information map (e.g., one of MAP1-MAPN), and $W_i / \sum_{i=1}^{N} W_i$ is the weighting factor for the $i^{th}$ depth-related value.

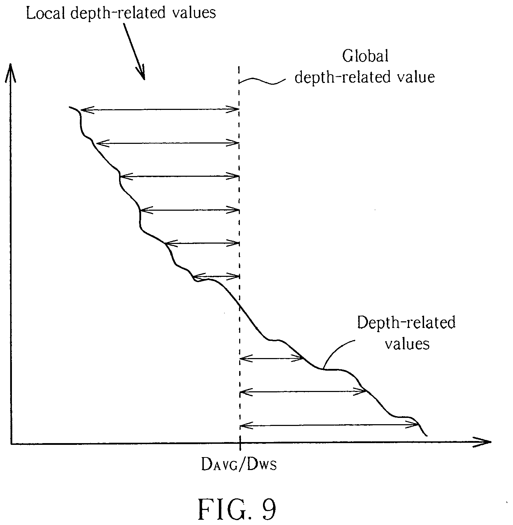

Regarding the derivation of the local depth-related values, each local depth-related value extractor in this embodiment may set the local depth-related value for each depth-related value included in the corresponding depth-related information map by subtracting the global depth-related value (e.g., $D_{AVG}$ or $D_{SW}$) from the depth-related value, as shown in FIG. 9.

Please refer to FIG. 7 again. The adjustment value determinator 708 is coupled to the global depth-related value extractors 711_1-711_N and local depth-related value extractors 712_1-712_N, and includes a plurality of first multipliers 709_1-709_N, a plurality of second multipliers 710_1-710_N, and a plurality of adders 713_1-713_N. Each of the first multipliers 709_1-709_N is arranged for multiplying a corresponding first depth control weighting factor $W_{G1}$-$W_{GN}$ and each global depth-related value (e.g., $D_{AVG}$ or $D_{SW}$). Each of the second multipliers 710_1-710_N is arranged for multiplying a corresponding second depth control weighting factor $W_{L1}$-$W_{LN}$ and the local depth-related values. Each of the adders 713_1-713_N performs an addition operation upon outputs of a preceding first multiplier and a preceding second multiplier to determine an adjustment value for a corresponding depth-related information map. In other words, the adjustment value determinator 708 in this embodiment is used to determine an adjustment value for each depth-related value.

Regarding the adjustment unit 704, it is coupled to the adjustment value determinator 708, and includes a plurality of adders 705_1-705_N, each arranged for performing a subtraction operation upon adjustment values and respective depth-related values to generate one adjusted depth-related information map having adjusted depth-related values included therein. In this way, the adjustment unit 704 outputs the adjusted depth-related information maps $MAP_1$'-$MAP_N$' with the desired disparity/depth setting. The pixel-based operation of the adjustment circuit 700 may be expressed using the following equation.

$$D_{Adjusted} = D_{Estimated} - \alpha \cdot D_{Local} - \beta \cdot D_{Global}$$

$$(4)$$

In above equation (4), $D_{Adjusted}$ represents an adjusted disparity/depth value included in an adjusted disparity/depth map, $D_{Estimated}$ represents an original disparity/depth value included in an estimated disparity/depth map, $\alpha \cdot D_{estimated}$ represents a local part of an adjustment value, $\beta \cdot D_{Global}$ represents a global part of the adjustment value, $\alpha$ represent a second depth control weighting factor, and $\beta$ represents a first depth control weighting factor. It should be noted that the same second depth control weighting factor (i.e., the same local depth control weighting factor) is applied to all of the local depth-related values for the same depth-related information map, and the first depth control weighting factor (i.e., the global depth control weighting factor) is kept unchanged no matter whether the second depth control weighting factor is adjusted in response to the confidence level.

When there is a large occlusion region (or there are many occlusion regions) and/or the reliability of the estimated disparity/depth map is poor, the second depth control weighting factor would be reduced to mitigate the undesired side effect, thus allowing the 3D display to be adjusted to a comfortable convergence depth. In this way, the 3D display quality is improved.

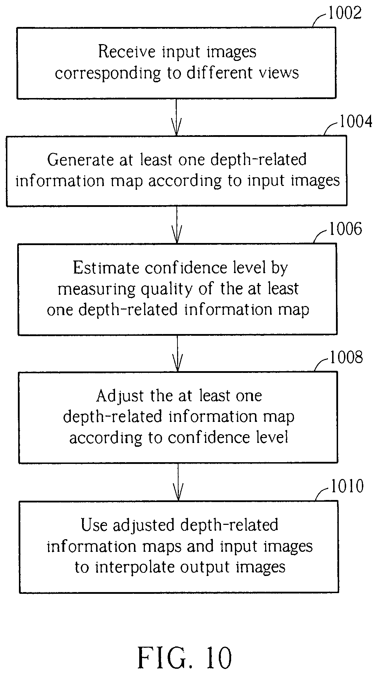

FIG. 10 is a flowchart illustrating a depth control method according to an embodiment of the present invention. If the result is substantially the same, the depth control method is not required to be executed in the exact order shown in FIG. 10. The exemplary depth control method may be employed by the device shown in FIG. 1, and may be briefly summarized by following steps.

Step 1002: Receive a plurality of input images corresponding to different views.
Step 1004: Generate at least one depth-related information map according to the input images.
Step 1006: Estimate a confidence level by measuring quality of the at least one depth-related information map.
Step 1008: Adjust the at least one depth-related information map according to the confidence level.
Step 1010: Use adjusted depth-related information maps and the input images to interpolate output images such that a depth effect of the output image is adaptively controlled in response to the adjusted depth-related information maps.

Steps 1002 and 1004 may be executed by the aforementioned depth-related information map generation circuit 102, step 1006 may be executed by the aforementioned quality measurement circuit 104, step 1008 may be executed by the aforementioned adjustment circuit 106, and step 1010 may be executed by the aforementioned image interpolation unit 101. As a person skilled in the art can readily understand details of each step after reading above paragraphs directed to the depth control apparatus 100, further description is omitted here for brevity.

The depth control apparatus 100 employs a hardware-based solution to implement the adaptive depth adjustment feature. However, this is for illustrative purposes only, and is not meant to be a limitation of the present invention. In an alternative design, a software-based solution may be employed to implement the adaptive depth adjustment feature. Please refer to FIG. 1 1, which is a block diagram illustrating a depth control apparatus according to a second embodiment of the present invention. The depth control apparatus 1100 includes a processor (e.g., a micro control unit or a central processing unit) 1102 and a machine readable medium (e.g., a non-volatile memory) 1104. The machine readable medium 1104 is coupled to the processor 1102, and used to store a program code PROG such as firmware of the depth control apparatus 1100. When the program code PROG is loaded and executed by the processor 1102, the program code PROG causes the processor 1102 to perform steps shown in FIG. 10. The same objective of implementing the adaptive depth adjustment is achieved.

## Claims

1. A depth control method, that comprises:

receiving a plurality of input images corresponding to different views (1002);
generating at least one depth-related information map according to the input images (1004);
estimating a confidence level by measuring quality of the at least one depth-related information map (1006); and
adjusting the at least one depth-related information map according to the confidence level (1008), wherein

the step of adjusting the at least one depth-related information map comprises:

determining an adjustment value for each depth-related value $D_{Estimated}$ included in a depth-related information map according to the confidence level to generate an adjusted depth-related value $D_{Adjusted}$ for each depth-related value $D_{Estimated}$; and

applying adjustment values to respective depth-related values $D_{Estimated}$ included in the depth-related information map,
**characterized in that**
the step of determining the adjustment value for each depth-related value $D_{Estimated}$ comprises:

determining a global depth-related value $D_{Global}$ according to all depth-related values included in the depth-related information map;

determining a local depth-related value $D_{Local}$ for each depth-related value $D_{Estimated}$ included in the depth-related information map according to the global depth-related value $D_{Global}$;

setting a first depth control weighting factor $\beta$;

setting a second depth control weighting factor $\alpha$ according to the confidence level; and

multiplying the second depth control weighting factor $\alpha$ and each local depth-related value $D_{Local}$ and multiplying the first depth control weighting factor $\beta$ and the global depth-related value $D_{Global}$ to determine the adjustment value for each depth-related value $D_{Estimated}$;

wherein the adjusted depth-related value $D_{Adjusted}$ for each depth-related value $D_{Estimated}$ is expressed by the folowing equation:

$$D_{Adjusted} = D_{Estimated} - \alpha \cdot D_{Local} - \beta \cdot D_{Global}.$$

2. The depth control method of claim 1, **characterized in that** the step of estimating the confidence level comprises:

performing a comparison upon images selected from the input images, and accordingly generating a comparison result; and

estimating the confidence level by referring to the comparison result.

3. The depth control method of claim 1, **characterized in that** the step of estimating the confidence level comprises:

generating at least one reconstructed image according to the at least one depth-related information map and at least one image selected from the input images;

performing a comparison upon the at least one reconstructed image and at least one image selected from the input images, and accordingly generating a comparison result; and

estimating the confidence level by referring to the comparison result.

4. The depth control method of claim 1, **characterized in that** the first depth control weighting factor $\beta$ is kept unchanged each time determination of the adjustment value for each depth-related value $D_{Estimated}$ is performed; or

the first depth control weighting factor $\beta$ and the second depth control weighting factor $\alpha$ are adjusted separately.

5. A depth control apparatus (100), that comprises:

a depth-related information map generation circuit (102), arranged for receiving a plurality of input images corresponding to different views, and generating at least one depth-related information map according to the input images;

a quality measurement circuit (104, 200, 400), arranged for estimating a confidence level by measuring quality of the at least one depth-related information map; and

an adjustment circuit (106, 600, 700), arranged for adjusting the at least one depth-related information map according to the confidence level, wherein the adjustment circuit (106, 600, 700) comprises:

an adjustment value determination unit (112, 602, 702), arranged for determining an adjustment value for each depth-related value $D_{Estimated}$ included in a depth-related information map according to the confidence level to generate an adjusted depth-related value $D_{Adjusted}$ for each depth-related value $D_{Estimated}$; and

an adjustment unit (114, 604, 704), arranged for applying adjustment values to respective depth-related values $D_{Estimated}$ included in the depth-related information map,

**characterized in that** the adjustment value determination unit (702) comprises:

a depth controller (706), arranged for setting a first depth control weighting factor $\beta$, and for setting a second depth control weighting factor $\alpha$ according to the confidence level;

a global depth-related value extractor (711_1-711_N), arranged for determining a global depth-related value $D_{Global}$ according to all depth-related values included in the depth-related information map;

a local depth-related value extractor (712_1-712_N), arranged for determining a local depth-related value $D_{Local}$ for each depth-related value $D_{Estimated}$ included in the depth-related information map according to the global depth-related value $D_{Global}$; and

an adjustment value determinator (708), arranged for multiplying the second depth control weighting factor $\alpha$ and each local depth-related value $D_{Local}$ and multiplying the first depth control weighting factor $\beta$ and the global depth-related $D_{Global}$ value to determine the adjustment value for each depth-related value $D_{Estimated}$;

wherein the adjusted depth-related value $D_{Adjusted}$ for each depth-related value $D_{Estimated}$ is expressed by the folowing equation:

$$D_{Adjusted} = D_{Estimated} - \alpha \cdot D_{Local} - \beta \cdot D_{Global}.$$

6. The depth control apparatus (100) of claim 5, **characterized in that** the quality measurement circuit (200) comprises:

a comparison unit (202), arranged for performing a comparison upon images selected from the input images, and accordingly generating a comparison result; and

a quality estimation unit (204), arranged for estimating the confidence level by referring to the comparison result.

7. The depth control apparatus (100) of claim 5, **characterized in that** the quality measurement circuit (400) comprises:

a reconstruction unit (402), arranged for generating at least one reconstructed image according to the at least one depth-related information map and at least one image selected from the input images;

a comparison unit (404), arranged for performing a comparison upon the at least one reconstructed image and at least one image selected from the input images, and accordingly generating a comparison result; and

a quality estimation unit (406), arranged for estimating the confidence level by referring to the comparison result.

8. The depth control apparatus (100) of claim 5, **characterized in that** the first depth control weighting factor is kept unchanged each time determination of the adjustment value for each depth-related value $D_{Estimated}$ is performed; or the first depth control weighting factor $\beta$ and the second depth control weighting factor $\alpha$ are adjusted separately.

**Patentansprüche**

1. Verfahren zur Tiefenkontrolle, umfassend:

Empfangen einer Vielzahl von Eingangsbildern, die zu verschiedenen Ansichten korrespondieren (1002) ;

Erstellen mindestens einer tiefenbezogenen Informationskarte gemäß den Eingangsbildern (1004);

Abschätzen eines Vertrauensgrades durch Messen der Qualität der mindestens einen tiefenbezogenen Informationskarte (1006); und

Anpassen der mindestens einen tiefenbezogenen Informationskarte gemäß dem Vertrauensgrad (1008), wobei

der Schritt des Anpassens der mindestens einen tiefenbezogenen Informationskarte umfasst:

Bestimmen einer Anpassungsgröße für jede in einer tiefenbezogenen Informationskarte enthaltenen tiefenbezogenen Größe $D_{Estimated}$ gemäß dem Vertrauensgrad um eine angepasste tiefenbezogene Größe $D_{Adjusted}$ für jede tiefenbezogene Größe $D_{Estimated}$ zu ermitteln; und

Anwenden von Anpassungsgrößen auf entsprechende in der tiefenbezogenen Informationskarte enthaltene tiefenbezogene Größen $D_{Estimated}$,

**dadurch gekennzeichnet, dass**

der Schritt des Bestimmens der Anpassungsgröße für jede tiefenbezogene Größe $D_{Estimated}$ umfasst:

Bestimmen einer globalen tiefenbezogenen Größe $D_{Global}$ gemäß aller in der tiefenbezogenen Informationskarte enthaltenen tiefenbezogenen Größen;

Bestimmen einer lokalen tiefenbezogenen Größe $D_{Local}$ für jede in der tiefenbezogenen Informationskarte enthaltenen tiefenbezogenen Größe $D_{Estimated}$ gemäß der globalen tiefenbezogenen Größe $D_{Global}$;

Setzen eines ersten Tiefenkontroll-Gewichtungsfaktors $\beta$;

Setzen eines zweiten Tiefenkontroll-Gewichtungsfaktors $\alpha$ gemäß dem Vertrauensgrad; und

Multiplizieren des zweiten Tiefenkontroll-Gewichtungsfaktors $\alpha$ und jeder lokalen tiefenbezogenen Größe $D_{Local}$

und multiplizieren des ersten Tiefenkontroll-Gewichtungsfaktors β und der globalen tiefenbezogenen Größe $D_{Local}$ um die Anpassungsgröße für jede tiefenbezogene Größe $D_{Estimated}$ zu bestimmen; wobei die angepasste tiefenbezogene Größe $D_{Adjusted}$ für jede tiefenbezogene Größe $D_{Estimated}$ durch folgende Gleichung ausgedrückt ist:

$$D_{Adjusted} = D_{Estimated} - α \cdot D_{Local} - β \cdot D_{Global}.$$

2. Verfahren zur Tiefenkontrolle nach Anspruch 1, **dadurch gekennzeichnet, dass** der Schritt der Abschätzung des Vertrauensgrades umfasst:

   Durchführen eines Vergleiches von aus den Eingangsbildern ausgewählten Bildern, und entsprechendes Erstellen eines Vergleichsergebnisses; und
   Abschätzen des Vertrauensgrades durch Bezugnahme auf das Vergleichsergebnis.

3. Verfahren zur Tiefenkontrolle nach Anspruch 1, **dadurch gekennzeichnet, dass** der Schritt der Abschätzung des Vertrauensgrades umfasst:

   Erstellen mindestens eines wiederhergestellten Bildes gemäß der mindestens einen tiefenbezogenen Informationskarte und mindestens eines aus den Eingangsbildern ausgewählten Bildes;
   Durchführen eines Vergleiches von dem mindestens einen wiederhergestellten Bild und mindestens einem aus den Eingangsbildern ausgewählten Bild, und entsprechendes Erstellen eines Vergleichsergebnisses; und
   Abschätzen des Vertrauensgrades durch Bezugnahme auf das Vergleichsergebnis.

4. Verfahren zur Tiefenkontrolle nach Anspruch 1, **dadurch gekennzeichnet, dass** der erste Tiefenkontroll-Gewichtungsfaktor β bei jedem Durchführen des Bestimmens der Anpassungsgröße für jede tiefenbezogene Größe $D_{Estimated}$ unverändert belassen wird; oder
   der erste Tiefenkontroll-Gewichtungsfaktor β und der zweite Tiefenkontroll-Gewichtungsfaktor α separat angepasst werden.

5. Vorrichtung zur Tiefenkontrolle (100) umfassend:

   einen Schaltkreis zum Erzeugen tiefenbezogener Informationskarten (102), eingerichtet zum Empfangen einer Vielzahl von Eingangsbildern, die zu verschiedenen Ansichten korrespondieren, und Erstellen mindestens einer tiefenbezogenen Informationskarte gemäß den Eingangsbildern;

   einen Schaltkreis zur Qualitätsmessung (104, 200, 400), eingerichtet zum Abschätzen eines Vertrauensgrades durch Messen der Qualität von der mindestens einen tiefenbezogenen Informationskarte; und
   einen Schaltkreis zur Anpassung (106, 600, 700), eingerichtet zum Anpassen der mindestens einen tiefenbezogenen Informationskarte gemäß dem Vertrauensgrad, wobei der Schaltkreis zur Anpassung (106, 600, 700) umfasst:

   eine Einheit zur Bestimmung von Anpassungsgrößen (102, 602, 702), eingerichtet zum Bestimmen einer Anpassungsgröße für jede in einer tiefenbezogenen Informationskarte enthaltene tiefenbezogene Größe $D_{Estimated}$ entsprechend dem Vertrauensgrad, um eine angepasste tiefenbezogene Größe $D_{Adjusted}$ für jede tiefenbezogene Größe $D_{Estimated}$ zu erstellen; und
   eine Einheit zur Anpassung (114, 604, 704), eingerichtet zum Anwenden von Anpassungsgrößen auf entsprechende in der tiefenbezogenen Informationskarte enthaltene tiefenbezogene Größen $D_{Estimated}$,
   **dadurch gekennzeichnet, dass** die Einheit zur Bestimmung der Anpassungsgröße (702) umfasst:

   einen Tiefen-Regler (706), eingerichtet zum Festlegen eines ersten Tiefenkontroll-Gewichtungsfaktors β, und für das Festlegen eines zweiten Tiefenkontroll-Gewichtungsfaktors α entsprechend dem Vertrauensgrad;
   einen globalen Ermittler für tiefenbezogene Größen (711_1-711_N), eingerichtet zum Ermitteln einer globalen tiefenbezogenen Größe $D_{Global}$ gemäß aller in der tiefenbezogenen Informationskarte enthaltenen tiefenbezogenen Größen;
   einen lokalen Ermittler für tiefenbezogene Größen (712_1-712_N), eingerichtet zum Ermitteln einer lokalen tiefenbezogenen Größe $D_{Local}$ für jede in der tiefenbezogenen Informationskarte enthaltene tiefenbezogene Größe $D_{Estimated}$ entsprechend der globalen tiefenbezogenen Größe $D_{Global}$; und

einen Determinator für Anpassungsgrößen (708), eingerichtet um den zweiten tiefenbezogenen Gewichtungsfaktor $\alpha$ mit jeder lokalen tiefenbezogenen Größe $D_{Local}$ zu multiplizieren und den ersten tiefenbezogenen Gewichtungsfaktor $\beta$ mit der globalen tiefenbezogenen Größe $D_{Global}$ zu multiplizieren um die Anpassungsgröße für jede tiefenbezogene Größe $D_{Estimated}$ zu ermitteln;

wobei die angepasste tiefenbezogene Größe $D_{Adjusted}$ für jede tiefenbezogene Größe $D_{Estimated}$ durch folgende Gleichung ausgedrückt ist:

$$D_{Adjusted} = D_{Estimated} - \alpha \bullet D_{Local} - \beta \bullet D_{Global}.$$

6. Vorrichtung zur Tiefenkontrolle (100) nach Anspruch 5, **dadurch gekennzeichnet, dass** der Schaltkreis zur Qualitätsmessung (200) umfasst:

eine Einheit für Vergleiche (202), eingerichtet zum Durchführen eines Vergleichs von aus den Eingangsbildern ausgewählten Bildern, und entsprechenden Erstellen eines Vergleichsergebnisses; und
eine Einheit für das Abschätzen der Qualität (204), eingerichtet zum Abschätzen des Vertrauensgrades durch Bezugnahme auf das Vergleichsergebnis.

7. Vorrichtung zur Tiefenkontrolle (100) nach Anspruch 5, **dadurch gekennzeichnet, dass** der Schaltkreis zur Qualitätsmessung (400) umfasst:

eine Einheit für das Wiederherstellen (402), eingerichtet um mindestens ein wiederhergestelltes Bild entsprechend der mindestens einen tiefenbezogenen Informationskarte und mindestens einem aus den Eingangsbildern ausgewählten Bild zu erstellen;
eine Einheit für Vergleiche (202), eingerichtet zum Vergleich von dem mindestens einen wiederhergestellten Bild und mindestens einem aus den Eingangsbildern ausgewählten Bild, und entsprechendes Erstellen eines Vergleichsergebnisses; und eine Einheit für das Abschätzen der Qualität (204), eingerichtet zum Abschätzen des Vertrauensgrades durch Bezugnahme auf das Vergleichsergebnis.

8. Vorrichtung zur Tiefenkontrolle (100) nach Anspruch 5, **dadurch gekennzeichnet, dass** der erste tiefenbezogene Gewichtungsfaktor bei jedem Durchführen des Bestimmens der Anpassungsgröße für jede tiefenbezogene Größe $D_{Estimated}$ unverändert belassen wird; oder der erste Tiefenkontroll-Gewichtungsfaktor $\beta$ und der zweite Tiefenkontroll-Gewichtungsfaktor $\alpha$ separat angepasst werden.

**Revendications**

1. Procédé de contrôle de profondeur, qui comprend le fait :

de recevoir une pluralité d'images d'entrée correspondant à différentes vues (1002) ;
de générer au moins une carte d'informations liées à la profondeur en fonction des images d'entrée (1004) ;
d'estimer un niveau de confiance en mesurant la qualité de l'au moins une carte d'informations liées à la profondeur (1006) ; et
d'ajuster l'au moins une carte d'informations liées à la profondeur en fonction du niveau de confiance (1008), dans lequel
l'étape qui consiste à ajuster l'au moins une carte d'informations liées à la profondeur comprend le fait :

de déterminer une valeur d'ajustement pour chaque valeur liée à la profondeur $D_{Estimated}$ incluse dans une carte d'informations liées à la profondeur en fonction du niveau de confiance pour générer une valeur ajustée liée à la profondeur $D_{Ajusted}$ pour chaque valeur liée à la profondeur $D_{Estimated}$ ; et
d'appliquer des valeurs d'ajustement à des valeurs liées à la profondeur respectives $D_{Estimated}$ incluses dans la carte d'informations liées à la profondeur,

**caractérisé en ce que**
l'étape de détermination de la valeur d'ajustement pour chaque valeur liée à la profondeur $D_{Estimated}$ comprend le fait :

de déterminer une valeur globale liée à la profondeur $D_{Global}$ en fonction de toutes les valeurs liées à la profondeur incluses dans la carte d'informations liées à la profondeur ;

de déterminer une valeur locale liée à la profondeur $D_{Local}$ pour chaque valeur liée à la profondeur $D_{Estimated}$ incluse dans la carte d'informations liées à la profondeur en fonction de la valeur globale liée à la profondeur $D_{Global}$ ;

de définir un premier facteur de pondération de contrôle de profondeur $\beta$ ;

de définir un deuxième facteur de pondération de contrôle de profondeur $\alpha$ en fonction du niveau de confiance ; et

de multiplier le deuxième facteur de pondération de contrôle de profondeur $\alpha$ et chaque valeur locale liée à la profondeur $D_{Local}$ et de multiplier le premier facteur de pondération de contrôle de profondeur $\beta$ et la valeur globale liée à la profondeur $D_{Global}$ pour déterminer la valeur d'ajustement pour chaque valeur liée à la profondeur $D_{Estimated}$ ;

dans lequel la valeur ajustée liée à la profondeur $D_{Ajusted}$ pour chaque valeur liée à la profondeur $D_{Estimated}$ est exprimée par l'équation suivante :

$$D_{Ajusted} = D_{Estimated} - \alpha.D_{Local} - \beta.D_{Global}$$

2.  Procédé de contrôle de profondeur de la revendication 1, **caractérisé en ce que** l'étape d'estimation du niveau de confiance comprend le fait :

d'effectuer une comparaison sur des images sélectionnées à partir des images d'entrée, et de générer un résultat de comparaison en conséquence; et

d'estimer le niveau de confiance en se référant au résultat de comparaison.

3.  Procédé de contrôle de profondeur de la revendication 1, **caractérisé en ce que** l'étape d'estimation du niveau de confiance comprend le fait :

de générer au moins une image reconstruite en fonction de l'au moins une carte d'informations liées à la profondeur et d'au moins une image sélectionnée à partir des images d'entrée ;

d'effectuer une comparaison sur l'au moins une image reconstruite et au moins une image sélectionnée à partir des images d'entrée, et de générer un résultat de comparaison en conséquence ; et

d'estimer le niveau de confiance en se référant au résultat de comparaison.

4.  Procédé de contrôle de profondeur de la revendication 1, **caractérisé en ce que** le premier facteur de pondération de contrôle de profondeur $\beta$ est maintenu inchangé chaque fois que la détermination de la valeur d'ajustement pour chaque valeur liée à la profondeur $D_{Estimated}$ est effectuée ; ou

le premier facteur de pondération de contrôle de profondeur $\beta$ et le deuxième facteur de pondération de contrôle de profondeur $\alpha$ sont ajustés séparément.

5.  Appareil de contrôle de profondeur (100), qui comprend :

un circuit de génération de carte d'informations liées à la profondeur (102), agencé pour recevoir une pluralité d'images d'entrée correspondant à différentes vues, et pour générer au moins une carte d'informations liées à la profondeur en fonction des images d'entrée ;

un circuit de mesure de qualité (104, 200, 400), agencé pour estimer un niveau de confiance en mesurant la qualité de l'au moins une carte d'informations liées à la profondeur ; et

un circuit d'ajustement (106, 600, 700), agencé pour ajuster l'au moins une carte d'informations liées à la profondeur en fonction du niveau de confiance, où le circuit d'ajustement (106, 600, 700) comprend :

une unité de détermination de valeur d'ajustement (112, 602, 702), agencée pour déterminer une valeur d'ajustement pour chaque valeur liée à la profondeur $D_{Estimated}$ incluse dans une carte d'informations liées à la profondeur en fonction du niveau de confiance pour générer une valeur ajustée liée à la profondeur $D_{Ajusted}$ pour chaque valeur liée à la profondeur $D_{Estimated}$ ; et

une unité d'ajustement (114, 604, 704), agencée pour appliquer des valeurs d'ajustement à des valeurs liées à la profondeur respectives $D_{Estimated}$ incluses dans la carte d'informations liées à la profondeur,

**caractérisé en ce que** l'unité de détermination de valeur d'ajustement (702) comprend

un contrôleur de profondeur (706), agencé pour définir un premier facteur de pondération de contrôle de profondeur $\beta$ et pour définir un deuxième facteur de pondération de contrôle de profondeur $\alpha$ en fonction du niveau de confiance ;

un dispositif d'extraction de valeur globale liée à la profondeur (711_1-711_N), agencé pour déterminer une valeur globale liée à la profondeur $D_{Global}$ en fonction de toutes les valeurs liées à la profondeur incluses dans la carte d'informations liées à la profondeur ;

un dispositif d'extraction de valeur locale liée à la profondeur (712_1-712_N), agencé pour déterminer une valeur locale liée à la profondeur $D_{Local}$ pour chaque valeur liée à la profondeur $D_{Estimated}$ incluse dans la carte d'informations liées à la profondeur en fonction de la valeur globale liée à la profondeur $D_{Global}$ ; et

un dispositif de détermination de valeur d'ajustement (708), agencé pour multiplier le deuxième facteur de pondération de contrôle de profondeur $\alpha$ et chaque valeur locale liée à la profondeur $D_{Local}$ et pour multiplier le premier facteur de pondération de contrôle de profondeur $\beta$ et la valeur globale liée à la profondeur $D_{Global}$ pour déterminer la valeur d'ajustement pour chaque valeur liée à la profondeur $D_{Estimated}$ ;

dans lequel la valeur ajustée liée à la profondeur $D_{Ajusted}$ pour chaque valeur liée à la profondeur $D_{Estimated}$ est exprimée par l'équation suivante:

$$D_{Ajusted} = D_{Estimated} - \alpha.D_{Local} - \beta.D_{Global}$$

6. Appareil de contrôle de profondeur (100) de la revendication 5, **caractérisé en ce que** le circuit de mesure de qualité (200) comprend :

une unité de comparaison (202), agencée pour effectuer une comparaison sur des images sélectionnées à partir des images d'entrée, et pour générer un résultat de comparaison en conséquence; et

une unité d'estimation de qualité (204), agencée pour estimer le niveau de confiance en se référant au résultat de comparaison.

7. Appareil de contrôle de profondeur (100) de la revendication 5, **caractérisé en ce que** le circuit de mesure de qualité (400) comprend :

une unité de reconstruction (402), agencée pour générer au moins une image reconstruite en fonction de l'au moins une carte d'informations liées à la profondeur et d'au moins une image sélectionnée à partir des images d'entrée ;

une unité de comparaison (404), agencée pour effectuer une comparaison sur l'au moins une image reconstruite et au moins une image sélectionnée à partir des images d'entrée, et pour générer un résultat de comparaison en conséquence; et

une unité d'estimation de qualité (406), agencée pour estimer le niveau de confiance en se référant au résultat de comparaison.

8. Appareil de contrôle de profondeur (100) de la revendication 5, **caractérisé en ce que** le premier facteur de pondération de contrôle de profondeur est maintenu inchangé chaque fois que la détermination de la valeur d'ajustement pour chaque valeur liée à la profondeur $D_{Estimated}$ est effectuée ; ou le premier facteur de pondération de contrôle de profondeur $\beta$ et le deuxième facteur de pondération de contrôle de profondeur $\alpha$ sont ajustés séparément.

Depth control apparatus — 100, 106

Quality measurement circuit — 104

Adjustment circuit — Adjustment value determination unit — 112

CL

$ADJ_i$

Depth-related information map generation circuit — 102

$F_1$

$F_N$

$MAP_1$

$MAP_N$

Adjustment unit — 114

$MAP_1'$

$MAP_N'$

Image interpolation unit — 101

$F_1'$

$F_N'$

FIG. 1

FIG. 2

```
┌─────────────────────┐      ┌─────────────────────┐
│                     │      │                     │
│       IMG_L         │      │       IMG_R         │
│                     │      │                     │
└─────────────────────┘      └─────────────────────┘
```

Comparison (percentage of
perfect matched regions)

CR

CL

FIG. 3

MAP₁     MAPₙ

· · ·

┌─────────────────┐ ╱─402
│  Reconstruction │
│      unit       │
└─────────────────┘

F₁ ──→

⋮

Fₙ ──→

FR₁   · · ·   FRₙ

┌─────────────────┐ ╱─404
│   Comparison    │
│      unit       │
└─────────────────┘

CR'

┌─────────────────────┐ ╱─406
│      Quality        │
│  estimation unit    │
└─────────────────────┘

CL

400

# FIG. 4

FIG. 5

FIG. 6

FIG. 7

FIG. 8

EP 2 608 549 B1

Local depth-related values

Global
depth-related value

Depth-related
values

$D_{AVG}/D_{WS}$

FIG. 9

FIG. 10

1100

Depth control apparatus

1102

Processor

1104

Machine readable
medium

PROG

FIG. 11

**EP 2 608 549 B1**

**REFERENCES CITED IN THE DESCRIPTION**

**Patent documents cited in the description**

- US 5917937 A
- WO 2011104151 A1